# EUROPEAN PATENT APPLICATION

(11) **EP 4 681 958 A1**
(43) Date of publication of application: **21.01.2026**
(21) Application number: 24774800.7
(22) Date of filing: 13.03.2024
(51) Int. Cl.: B60K 35/10, G01D 7/00

(54) **INFORMATION DISPLAY SYSTEM, IMAGE DISPLAY METHOD, AND WORK VEHICLE**

(30) Priority: 17.03.2023 JP 2023042620
(71) Applicant: Kubota Corporation, Osaka-shi, Osaka 556-8601 (JP)
(72) Inventor: KAECHI, Shuya, Sakai-shi Osaka 5900908 (JP)
(74) Representative: Cabinet Beau de Loménie
(86) International application number: PCT/JP2024/009845
(87) International publication number: WO 2024/195662

(57) **Abstract**

An information display system for a work vehicle including an auxiliary transmission is disclosed. The information display system comprises a meter panel unit including a display element and a controller configured to control the meter panel unit. The controller causes a display region of the display element to display a graphical user interface (GUI) to enable operation settings to be made for the work vehicle for each stage of the auxiliary transmission on a single setting screen.

## Description

### TECHNICAL FIELD

The present disclosure relates to information display systems, image display methods, and work vehicles.

### BACKGROUND ART

Research and development of smart agriculture that uses information and communication technology (ICT) and the Internet of things (IoT), as the next-generation agriculture, is under way. Automated and unmanned operations of agricultural machines such as tractors used in fields have been studied and developed. For example, work vehicles that travel while performing automatic steering, using a positioning system such as a global navigation satellite system (GNSS) that can perform precise positioning, have been put into practice.

A meter panel unit that displays and notifies an operator of a travel speed, the load state of an engine, and the state of each portion of a work vehicle is provided in front of the operator's seat of an agricultural work vehicle such as a tractor.

Patent Document 1 describes a commonly used meter unit for passenger cars.

### CITATION LIST

### PATENT LITERATURE

Patent Document No. 1: Japanese Laid-Open Patent Publication No. 2012-32209

### SUMMARY OF INVENTION

### TECHNICAL PROBLEM

A meter panel provided in an agricultural machine such as a tractor is required to accurately notify the operator of various kinds of information about the vehicle when the vehicle is traveling or working. In addition, it is necessary to display more kinds of information in order to allow such an agricultural machine to perform various kinds of works outdoors compared to general passenger cars. In the case in which an agricultural machine is used in smart agriculture, even more kinds of information need to be displayed. However, as the amount of information displayed on the meter panel increases, visibility decreases, and therefore, it is more difficult for the operator to obtain necessary information.

There is an increased demand for such a meter panel not only for agricultural machines but also for construction machines that are used in work in construction sites. Agricultural machines and construction machines that can travel are hereinafter collectively referred to as "work vehicles".

The present disclosure provides information display systems that can solve such a problem, work vehicles including such information display systems, and display methods for displaying images.

### SOLUTION TO PROBLEM

The present disclosure provides solutions described in the following aspects.

### [Item 1]

An information display system for a work vehicle including an auxiliary transmission, the information display system comprising:
a meter panel unit including a display element; and
a controller configured to control the meter panel unit,
wherein
the controller is configured to cause the display region of the display element to display a graphical user interface (GUI) to enable operation settings to be made for the work vehicle for each stage of the auxiliary transmission on a single setting screen.

### [Item 2]

The information display system of Item 1, wherein
the controller is configured to cause a number of tabs equal to the number of stages of the auxiliary transmission to be displayed within the setting screen, and
the operation setting for each stage of the auxiliary transmission is possible by the user switching the tabs.

### [Item 3]

The information display system of Item 2, wherein
the stages of the auxiliary transmission include three stages including low (L), medium (M), and high (H), and
the controller is configured to cause three tabs corresponding to L, M, and H to be displayed on the setting screen.

### [Item 4]

The information display system of Item 2, wherein
the stages of the auxiliary transmission include four stages including creep (C), low (L), medium (M), and high (H), and
the controller is configured to cause four tabs corresponding to C, L, M, and H to be displayed on the setting screen.

### [Item 5]

The information display system of any one of Items 1 to 4, wherein the operation setting includes setting a range of main transmission stages corresponding to each stage of the auxiliary transmission in an automatic transmission function.

### [Item 6]

The information display system of any one of Items 1 to 5, wherein the operation setting includes setting an upper limit value for engine revolutions per unit time corresponding to each stage of the auxiliary transmission.

### [Item 7]

The information display system of any one of Items 1 to 6, wherein the controller is configured to transmit information set for each stage of the auxiliary transmission to a vehicle controller that controls the work vehicle.

### [Item 8]

The information display system of any one of Items 1 to 7, wherein
the display region of the display element includes a primary region in which information related to a travel state of the work vehicle is displayed, and
the controller is configured to display the setting screen below the primary region.

### [Item 9]

The information display system of any one of Items 1 to 8, wherein
the meter panel unit includes first and second analog meters each including a pointer, and
the display element is provided between the first and second analog meters.

### [Item 10]

A work vehicle comprising the information display system of any one of Items 1 to 9.

### [Item 11]

A computer-implemented display method for displaying an image on a display element of a meter panel unit for a work vehicle including an auxiliary transmission, the method comprising:
causing a display region of the display element to display a graphical user interface (GUI) to enable operation settings to be made for the work vehicle for each stage of the auxiliary transmission on a single setting screen.

### [Item 12]

A computer program executed by a computer to cause a display element of a meter panel unit for a work vehicle including an auxiliary transmission to display an image, the computer program causing the computer to perform:
causing a display region of the display element to display a graphical user interface (GUI) to enable operation settings to be made for the work vehicle for each stage of the auxiliary transmission on a single setting screen.

General or specific aspects of the present disclosure may be implemented using a device, system, method, integrated circuit, computer program, non-transitory computer-readable storage medium, or any combination thereof. The computer-readable storage medium may be inclusive of volatile and non-volatile storage media. A device may include a plurality of devices. In the case in which a device includes two or more devices, the two or more devices may be provided in a single apparatus, or separately arranged in two or more different apparatuses.

### ADVANTAGEOUS EFFECTS OF INVENTION

According to embodiments of the present disclosure, information display systems capable of displaying various kinds of information required during agricultural work with high visibility, work vehicles including such information display systems, and display methods for displaying images are provided.

### BRIEF DESCRIPTION OF DRAWINGS

[FIG. **1A**] is a side view schematically illustrating an example work vehicle according to an embodiment of the present disclosure.
[FIG. **1B**] is a front view schematically illustrating a meter panel unit when attached behind a steering wheel positioned in front of an operator's seat of a work vehicle, in an embodiment of the present disclosure.
[FIG. **2**] is a front view illustrating an example arrangement of main components of the meter panel unit of this embodiment.
[FIG. **3**] is a perspective view illustrating an example configuration of a wall surface portion of the meter panel unit of this embodiment.
[FIG. **4**] is a perspective view illustrating an example configuration of a transparent cover of the meter panel unit of this embodiment.
[FIG. **5**] is a front view illustrating an example arrangement of indicators of the meter panel unit of this embodiment.
[FIG. **6**] is a front view illustrating an example state in which various kinds of information are displayed on a display element of the meter panel unit of this embodiment.
[FIG. **7**] is a perspective view of an analog meter in a meter panel unit of this embodiment.
[FIG. **8**] is a front view illustrating a positional relationship between a first analog meter, an arc-shaped indicator, and a facing plate.
[FIG. **9**] is a front view illustrating an example configuration of an arc-shaped indicator.
[FIG. **10**] is a front view illustrating a second analog meter and a second arc-shaped indicator.
[FIG. **11**] is a block diagram schematically illustrating an example configuration of an information display system in an embodiment of the present disclosure.
[FIG. **12**] is a block diagram illustrating an example hardware configuration of a controller.
[FIG. **13**] is a front view schematically illustrating an example in which an arc having the same color as that of light emitted from a light emitting region of an arc-shaped indicator is displayed.
[FIG. **14**] is a front view schematically illustrating an example in which an arc having the same color as that of light emitted from a light emitting region of an arc-shaped indicator, and another object having another shape and having an arc having the same color, are displayed.
[FIG. **15**] is a diagram illustrating an example of a home screen.
[FIG. **16**] is a diagram schematically illustrating an example of segmentation of a display region.
[FIG. **17A**] is a diagram illustrating an example of a home screen.
[FIG. **17B**] is a diagram illustrating an example of a menu screen.
[FIG. **17C**] is a diagram illustrating an example of a screen showing setting items related to transmission.
[FIG. **17D**] is a diagram illustrating an example of setting for each stage of auxiliary transmission.
[FIG. **17E**] is a diagram illustrating another example of setting for each stage of auxiliary transmission.

### DESCRIPTION OF EMBODIMENTS

Meter panel units according to embodiments of the present disclosure will be described below with reference to the accompanying drawings. It should be noted that like reference signs refer to like parts throughout the several views.

The embodiments described below are exemplified to embody technical ideas of the present invention, and the present invention is not limited to the following. Furthermore, the descriptions of sizes, materials, shapes, relative arrangements, and the like of components are not intended to limit the scope of the present invention thereto but intended to be illustrative. The size and positional relationship of members illustrated in the drawings may be exaggerated to facilitate understanding.

As used herein, the term "parallel" with respect to two straight lines, sides, surfaces, or the like is intended to encompass some angular deviations from absolute parallelism between the two straight lines, sides, surfaces, or the like that are in the range of 0 to 5° unless otherwise specified. As used herein, the term "perpendicular" or "orthogonal" with respect to two straight lines, sides, surfaces, or the like is intended to encompass some angular deviations from absolute perpendicularity or orthogonality (90°) between the two straight lines, sides, surfaces, or the like that are in the range of ±5° unless otherwise specified. The angle between two straight lines, sides, surfaces, or the like has a positive value, but not a negative value, unless otherwise specified.

### <Overall configuration of work vehicle>

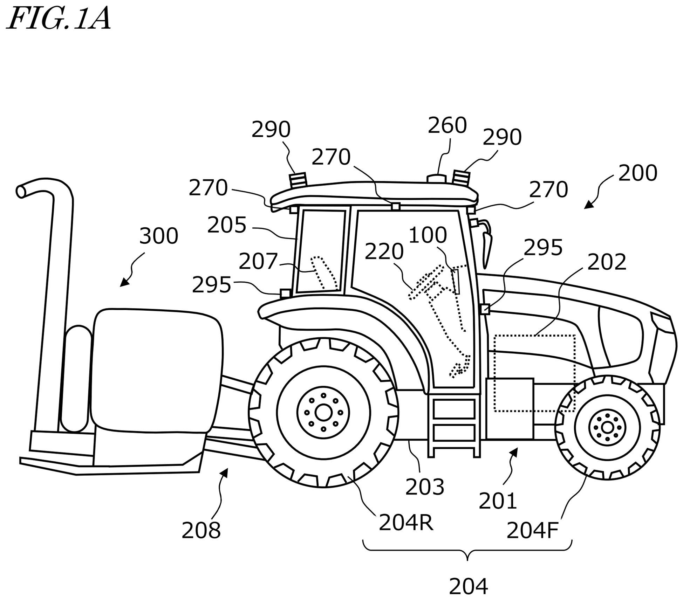

FIG. **1A** is a side view schematically illustrating an example work vehicle **200** according to this embodiment. The illustrated work vehicle **200** is a tractor that tows an implement (replaceable work equipment) **300.**

The work vehicle **200** of FIG. **1A** includes a vehicle body **201,** a prime mover (engine) **202,** and a transmission **203.** The vehicle body **201** is provided with a travel device including tire-mounted wheels **204,** and a cabin **205.** The travel device includes four wheels **204,** axles for rotating the four wheels, and brakes for slowing or stopping the axles. The wheels **204** of this example include a pair of front wheels **204F** and a pair of rear wheels **204R.** One or both of the front wheel **204F** and the rear wheel **204R** may be replaced by a plurality of wheels to which a continuous track is attached (crawler) instead of a tire-mounted wheel.

In the cabin **205,** a meter panel unit **100** according to an embodiment of the present disclosure, an operator's seat **207,** a steering wheel **220,** and switches for operations are provided.

The work vehicle **200** of FIG. **1A** is provided with a plurality of external sensors to sense surroundings of the work vehicle **200.** The external sensors may include various kinds of sensors such as a plurality of cameras **270,** a plurality of obstacle sensors **295,** and a plurality of LiDAR sensors **290.** The cameras **270** may, for example, be provided on the front, rear, left, and right sides of the work vehicle **200.** Each camera **270** captures an image of an environment around the work vehicle **200,** and generates image data. Images obtained by the cameras **270** may, for example, be transmitted to a terminal device for remote monitoring. The cameras **270** are optionally provided, and the number thereof is not particularly limited. The LiDAR sensor **290** is an example external sensor to output sensor data indicating a distribution of objects present in an environment around the work vehicle **200.** In the example of FIG. **1A****,** two LiDAR sensors **290** are provided at an upper front portion and an upper rear portion of the cabin **205.** The LiDAR sensors **290** may be provided at other positions (e.g., a lower portion of a front surface of the vehicle body **201**). Each LiDAR sensor **290** repeatedly outputs sensor data indicating distances to and directions of measurement points of objects existing in a surrounding environment, or the three-dimensional coordinate values of the measurement points, while the work vehicle **200** is traveling. The number of LiDAR sensors **290** is not limited to two and may be one or at least three. In the example of FIG. **1A****,** the plurality of obstacle sensors **295** are provided at a front portion and a rear portion of the cabin **205.** The obstacle sensors **295** may be positioned at other positions. The obstacle sensors **295** may include a laser scanner or ultrasonic sonar, for example.

The work vehicle **200** further includes a GNSS unit **260.** GNSS collectively refers to satellite-based positioning systems, such as the global positioning system (GPS), the quasi-zenith satellite system (QZSS, for example, Michibiki), GLONASS, Galileo, and BeiDou. The GNSS unit **260** receives satellite signals transmitted from a plurality of GNSS satellites (also referred to as GNSS signals), and performs positioning based on the satellite signals. The GNSS unit **260** is provided at an upper portion of the cabin **205,** but the GNSS unit **260** may be provided at other positions.

The engine **202** may, for example, be a diesel engine. An electric motor may be used instead of a diesel engine. The transmission **203** is capable of changing the propelling force and movement speed of the work vehicle **200** by changing gear ratios. The transmission **203** is also capable of allowing the work vehicle **200** to switch between forward movement and rearward movement.

A connecting device **208** is provided at a rear portion of the vehicle body **201.** The connecting device **208** includes, for example, a three-point support device (also referred to as a "three-point linkage" or "three-point hitch"), a power take-off (PTO) shaft, a universal joint, and a communication cable. The connecting device **208** can be used to removably connect an implement **300** to the work vehicle **200.** The connecting device **208** can change the position or orientation of the implement **300** by raising or lowering the three-point linkage using, for example, a hydraulic device. In addition, power can be transmitted from the work vehicle **200** to the implement **300** through the universal joint. While towing the implement **300,** the work vehicle **200** allows the implement **300** to perform predetermined work. A connecting device may also be provided at a front portion of the vehicle body **201.** In that case, an implement can be connected in front of the work vehicle **200.**

Although the implement **300** of FIG. **1A** is, for example, a sprayer for spraying a chemical agent to crops, the implement **300** is not limited to sprayers. For example, any kind of implement **300** such as a mower, seeder, spreader, rake implement, baler, harvester, plough, harrow, or rotary tiller may be connected to the work vehicle **200** for use.

Thus, the work vehicle **200,** which is used in smart agriculture, is equipped with various sensors, and performs various kinds of work together with the implement **300.** During such work, it is necessary to give the driver (user or operator) various kinds of information about a travel state and a work state. Therefore, information that should be displayed on the meter panel unit **100** may significantly vary depending on the kind and phase of work.

It should be noted that the work vehicle **200,** such as a tractor, may be configured to travel by manual driving, automatic steering, or automatic driving.

### <Overall configuration of meter panel unit>

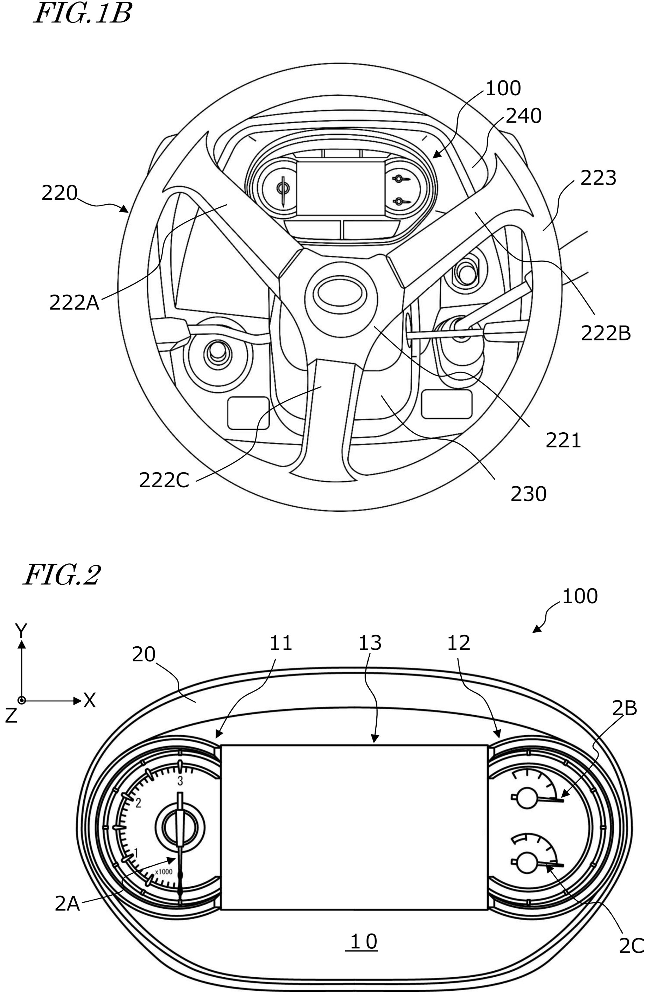

FIG. **1B** is a front view schematically illustrating the meter panel unit **100** when the meter panel unit **100** is attached to a tractor, which is an example work vehicle, in an embodiment of the present disclosure. In the example illustrated in FIG. **1B****,** the meter panel unit **100** is positioned on the front side of the operator's seat of the tractor. Specifically, the meter panel unit **100** is positioned above a steering column (steering wheel stay) **230** that supports the steering wheel **220** in a manner that allows the steering wheel **220** to rotate, and is fitted into an opening of a meter cover **240.** In this example, the steering wheel **220** has a central hub (horn cover) **221,** three spokes **222A, 222B,** and **222C** radially extending from the horn cover **221,** and a rim **223** supported by the spokes **222A, 222B,** and **222C.** The meter panel unit **100** is provided at a position that allows the operator sitting on the operator's seat to see the meter panel unit **100.** In the example of FIG. **1B****,** various kinds of information displayed on the meter panel unit **100** can be seen through an opening between the spokes **222A** and **222B.**

The meter panel unit **100** is required to have excellent visibility. In particular, in the case of movable work vehicles capable of performing automatic steering or automatic driving, various kinds of information that are not displayed on general passenger cars need to be displayed during various kinds of agricultural work. For the meter panel unit **100,** having such a feature, the visibility is preferably improved so as to avoid overlooking more important information of various kinds of information. In addition, in the case in which the meter panel unit **100** is mounted on various work vehicles, it is desirable that the meter panel unit **100** have a structure that allows easy attachment. As described below, the meter panel unit **100** of this embodiment has excellent visibility and is easy to attach.

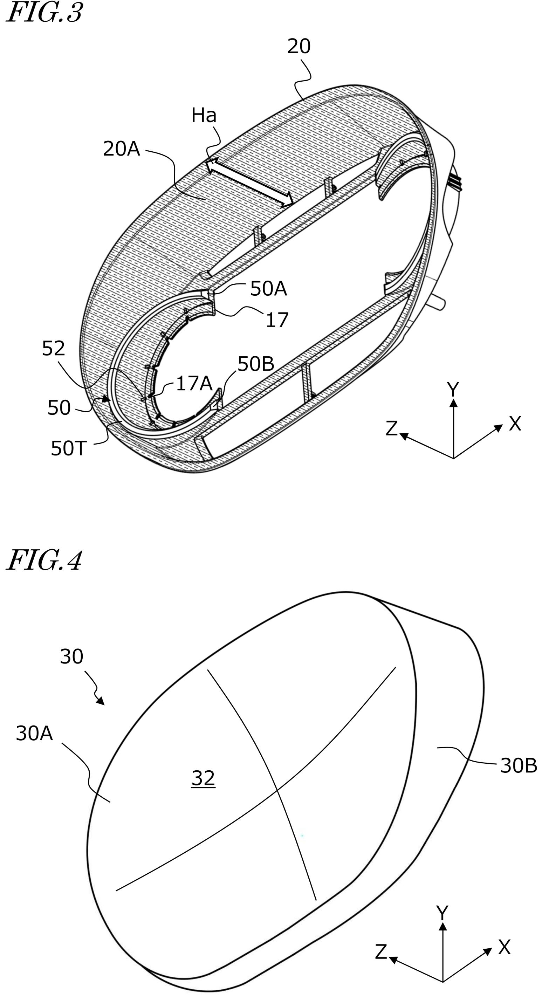

An overall configuration of the meter panel unit **100** will be described below with reference to FIGS. **2****,** **3****,** and **4****.** FIG. **2** is a front view illustrating an example arrangement of main components of the meter panel unit **100** of this embodiment. FIG. **3** is a perspective view illustrating an example configuration of a wall surface portion described below of the meter panel unit **100.** FIG. **4** is a perspective view illustrating an example configuration of a transparent cover described below of the meter panel unit **100.** These drawings illustrate an X-axis, a Y-axis, and a Z-axis that are orthogonal to one another for reference (right-handed coordinate system). In the present description, the positive direction of the Y axis is also referred to as "upward", and the negative direction thereof is also referred to as "downward". The positive direction of the X axis is also referred to as "rightward", and the negative direction thereof is also referred to as "leftward". The positive direction of the Z axis is also referred to as "forward", and the negative direction thereof is also referred to as "backward".

As illustrated in FIG. **2****,** the meter panel unit **100** includes a meter portion **10** including a first analog meter **11,** a second analog meter **12,** and a display element **13** positioned between the first and second analog meters **11** and **12.** In the present description, a portion of the meter portion **10** of FIG. **2** that displays information is also referred to as a display surface side of the meter portion **10.**

The first analog meter **11** includes a pointer **2A,** and the second analog meter **12** includes pointers **2B** and **2C.** The pointer **2A** is supported in a manner that allows the pointer **2A** to revolve around the axis of rotation positioned near the center of the first analog meter **11.** The pointer **2A** indicates the engine speed by the direction in which the tip of the pointer **2A** is oriented, for example. Here, "engine speed" means the number of revolutions of the engine per unit time (for example, one minute). The pointers **2B** and **2C** are supported in a manner that allows the pointers **2B** and **2C** to revolve around the respective axes of rotation located at different positions of the second analog meter **12.** The pointer **2B** indicates the remaining amount of fuel by the direction in which the tip of the pointer **2B** is oriented. The pointer **2C** indicates the temperature (water temperature) of engine-cooling water by the direction in which the tip of the pointer **2C** is oriented, for example. The pointers **2A, 2B,** and **2C** are driven by a driver (movement) included in the meter portion **10.** The driver receives an electrical signal indicating a sensor output such as the engine speed, the remaining amount of fuel, or the water temperature, and converts the electrical signal into mechanical movements for changing the orientations of the pointers **2A, 2B,** and **2C.** The driver for each pointer **2A, 2B, 2C** includes an actuator such as a stepping motor.

The display element **13** is a digital meter rather than an analog meter. The display element **13** is, for example, an active matrix display, such as a liquid crystal display panel or organic light emitting diode (OLED). In the following description, the display element **13** is assumed to be a liquid crystal display (LCD) as an example. The display element **13** includes a large number of pixels two-dimensionally arranged in a display region, and provides display visible to the human eye by emitting light from the large number of pixels. In this embodiment, each pixel of the display element **13** includes R, G, and B subpixels, and therefore, the display element **13** is capable of displaying color images. Unlike analog meters, the display element **13** is capable of displaying numerals, letters, graphics, icons, symbols, still images, or moving images having any appropriate sizes at any appropriate positions in the display region. Strictly speaking, numerals, letters, graphics, icons, and symbols are a part of images (still images or moving images) displayed in the display region by the display element **13.** The display element **13** is also capable of apparently displaying an image similar to all or a portion of an analog meter having a pointer. In the case in which the display element **13** displays an image of an "analog meter", a "pointer" in the image can be turned in any appropriate direction as a portion of moving images, by changing images on a frame-by-frame basis. It should be noted that in the case in which the work vehicle is an electric vehicle that is driven by a battery, the display of the engine speed, the remaining amount of fuel, and the water temperature may, for example, be replaced by the display of the power of a motor, the state of charge of the battery, and the temperature of the battery, respectively.

The "analog meter" displayed by a display device such as the display element **13** is different from the first analog meter **11** and the second analog meter **12** in that the former is two-dimensional and the latter is three-dimensional. In addition, whereas the shape, color, and size of the pointer and scales of the former analog meter are changeable, it is difficult to change those of the latter. Furthermore, the visibility of the former depends on the contrast of an image, and therefore, is likely to decrease during the daytime, when external light is strong, whereas such a problem with the latter is relatively small. With the above in mind, in this embodiment, a portion of information displayed in the meter portion **10,** particularly information having high importance and requiring high visibility, is displayed using an analog meter having a three-dimensional structure.

An external shape of the meter portion **10** when the meter portion **10** is viewed from the front of the display surface side is a closed loop similar to an ellipse. The external shape of the meter portion **10** is not limited to such an example. The external shape of the meter portion **10** when the meter portion **10** is viewed from the front may have generally a rectangular shape, or a shape that is a combination of a straight line and a curved line.

The meter panel unit **100** further includes a wall surface portion **20** fixed to the display surface side of the meter portion **10,** and a transparent cover **30** opposite the display surface of the meter portion **10.** Example configurations of the wall surface portion **20** and the transparent cover **30** will be described below.

The wall surface portion **20** surrounds the first analog meter **11,** the display element **13,** and the second analog meter **12** entirely along the peripheral edge of the meter portion **10.** The wall surface portion **20** may, for example, be formed of a plastic (synthetic resin). The wall surface portion **20** protrudes vertically (the positive direction of the Z axis) from the display surface of the meter portion **10.** The wall surface portion **20** does not necessarily need to be perpendicular to the display surface of the meter portion **10,** and may be tilted from the Z axis. In the present disclosure, the distance between the display surface of the meter portion **10** and an end on the front side of the wall surface portion **20** is referred to as a "height" of the wall surface portion **20.** In this embodiment, the height of the wall surface portion **20** is not uniform along the peripheral edge of the meter portion **10,** and may vary depending on the position on the peripheral edge.

In this embodiment, a rough shape of the wall surface portion **20** when the wall surface portion **20** is viewed from the front of the meter portion **10** is a closed loop such as an ellipse. In such a region surrounded by the wall surface portion **20,** or the inside of the wall surface portion **20,** a single, continuous, three-dimensional space surrounded by the inner wall surface of the wall surface portion **20** is provided.

As illustrated in FIG. **3****,** the wall surface portion **20** includes a portion having a relatively great height and a portion having a relatively small height. The portion having a relatively great height of the wall surface portion **20** includes a visor region **20A.** At least the visor region **20A** of the wall surface portion **20** has light-blocking properties. The visor region **20A** is arranged at a position above the display element **13** with the meter panel unit **100** attached to the work vehicle. The visor region **20A** of the wall surface portion **20** serves as eaves to reduce a decrease in the display visibility of the meter portion **10** caused due to external light such as sunlight shining on the display element **13** or the like. A height (greatest height) **Ha** of the visor region **20A** is at least 20 mm, preferably at least 35 mm, and more preferably at least 40 mm. When the wall surface portion **20** is viewed from the direction of the normal to the meter portion **10,** the visor region **20A** extends to the left and right across a range wider than the display element **13,** surrounding an upper half portion of each of the first analog meter **11** and the second analog meter **12.** The height of the visor region **20A** is greatest above the display element **13** and becomes smaller toward the left and right ends of the display element **13.**

The height of the wall surface portion **20** is relatively small at a position close to the lower end of the meter portion **10.** The smallest height of the wall surface portion **20** may, for example, be at most 5 mm, or may be 0 mm.

FIG. **3** also illustrates, in addition to the wall surface portion **20,** other structural components that are integral with the wall surface portion **20.** As described above, the wall surface portion **20** may be made of a plastic, and therefore, the wall surface portion **20** and other structural components can be produced simultaneously by a resin molding technique. Structural components other than the wall surface portion **20** of FIG. **3** are described below.

As illustrated in FIG. **4****,** the transparent cover **30** includes a front surface section **30A** including a concave surface **32,** and a side surface section **30B** extending from the peripheral edge of the front surface section **30A** along the outer side of the wall surface portion **20.** The side surface section **30B** of the transparent cover **30** can cover the outer side of the wall surface portion **20** along all the periphery thereof. The transparent cover **30** may, for example, be made of a colorless, transparent plastic (e.g., acrylic resin), or glass. In this embodiment, the front surface section **30A** and the side surface section **30B** of the transparent cover **30** are integrally formed together.

When the transparent cover **30** is viewed from the direction of the normal to the meter portion **10** with the meter panel unit **100** attached to the work vehicle, the front surface section **30A** of the transparent cover **30** is preferably tilted forward toward the operator. In the case in which the front surface section **30A** is tilted forward, when the operator sees the meter portion **10** through the transparent cover **30,** the operator's face and the background behind the operator are less likely to be reflected on the transparent cover **30.**

Because the front surface section **30A** of the transparent cover **30** has the concave surface **32,** when the operator sees the meter portion **10** through the transparent cover **30,** enlarged images of the operator and the background reflected by the transparent cover **30** are seen by the operator. This is because concave surface reflection occurs due to the front surface section **30A** of the transparent cover **30.** When information displayed by the meter portion **10** is represented by relatively small numerals, letters, graphics, or the like, the visibility of displayed information decreases as the spatial frequency of reflections on the transparent cover **30** decreases. According to this embodiment, such a decrease in visibility can be reduced.

The curvature ρ of the concave surface **32** of the transparent cover **30** is preferably uniform in each of the horizontal direction (the X-axis direction or the left-right direction) and the vertical direction (the Y-axis direction or the top-bottom direction). The curvature ρ determines the factor of magnification of a viewed image. As the curvature ρ is more uniform irrespective of direction, the concave surface **32** is closer to a portion of a sphere, and therefore, an enlarged image having a natural ratio is seen. It should be noted that the front surface section **30A** does not necessarily need to have a concave surface. For example, in the case in which the front surface section **30A** of the transparent cover **30** is covered with anti-reflection film, it is no longer necessary to address reflections, and therefore, the front surface section **30A** may be a flat surface or a convex surface.

The side surface section **30B** of the transparent cover **30** extends along the outer side of the wall surface portion **20.** Therefore, the side surface section **30B** has a height corresponding to the height of the wall surface portion **20.** For example, the height of a portion of the side surface section **30B** of the transparent cover **30** that covers the visor region **20A** of the wall surface portion **20** is greater than that of the other portion. A space delimited by the front surface section **30A** and the side surface section **30B** of the transparent cover **30** is referred to as an "inner space" of the transparent cover **30.** The shape and size of the inner space of the transparent cover **30** are great enough to accommodate substantially the entirety of the wall surface portion **20.** As described above, a single, continuous, three-dimensional space surrounded by the inner wall surface of the wall surface portion **20** is provided inside the wall surface portion **20.** A front side of this three-dimensional space is delimited and blocked by the transparent cover **30.** The outer side of the wall surface portion **20** may be in contact with the inner side of the side surface section **30B** of the transparent cover **30,** or a space may be provided therebetween.

It should be noted that condensation of water vapor existing in the "inner space" is likely to occur to fog the transparent cover **30.** In order to prevent such fogging, the surface of the transparent cover **30** may be coated with an antifogging agent. Alternatively, an antifogging effect can be obtained by providing a small opening in a portion of the meter portion **10** so that the inner space is in fluid communication with the outside. It should be noted that the transparent cover **30** does not need to be entirely transparent. For example, the side surface section **30B** does not need to be transparent.

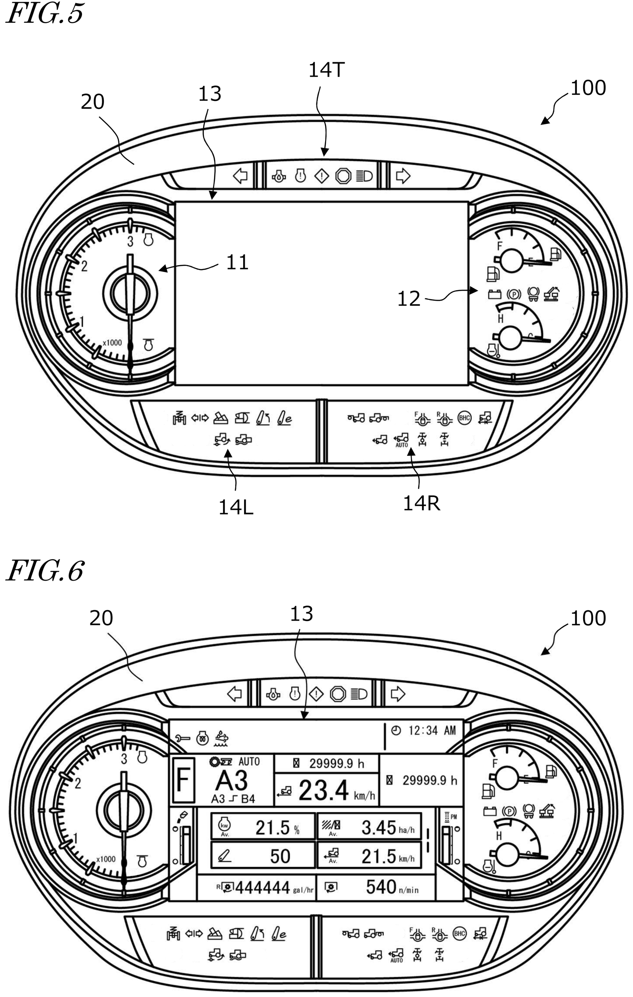

Next, an indicator region of the meter portion **10** will be described with reference to FIG. **5****.** In the example of FIG. **5****,** the meter portion **10** includes an indicator region **14T** provided above the display element **13,** and indicator regions **14L** and **14R** provided below the display element **13.** Various indicators are provided in each of the indicator regions **14T, 14L,** and **14R.** Each indicator presents predetermined information such as warning when a light emitting device such as a light emitting diode (LED) behind the indicator is on.

It should be noted that in this embodiment, two indicator regions **14L** and **14R** that are divided left and right are arranged below the display element **13,** but one indicator region that integrates the two indicator regions may be arranged.

Seeing the indicator region **14T,** which is positioned above the display element **13,** is less likely to be obstructed by the spokes **222A, 222B,** and **222C** of the steering wheel **220,** compared to the other indicator regions **14L** and **14R.** Therefore, it is preferable that indicators for indicating particularly important information (information having a higher warning level) (e.g., indicators for indicating the on/off state of the illumination device, turn signals, and warnings to the operator) be selected from a large number of indicators and arranged in the indicator region **14T.** The "warning level" of information displayed by an indicator may, for example, be specified in the manual of the work vehicle. For example, information such as the abnormality or failure of the engine and the on/off state of the headlamp has a higher warning level.

In this embodiment, each indicator arranged in the indicator regions is configured with a light transmission region having a shape that defines a characteristic graphic (including icons and/or letters), and a light emitting device arranged behind the light transmission region. The indicator may be turned on/off by the light emitting device behind the indicator being turned on/off. For example, one or two light emitting devices are arranged behind each indicator.

Next, an example display of the display element **13** will be described with reference to FIG. **6****.** In the example of FIG. **6****,** the display region of the display element **13** is divided into several regions as described below. In each region, an "image" showing information such as the gear ratio, vehicle speed, function performance display, or hour meter is displayed. The images include various kinds of information represented by letters, numerals, graphics, icons, symbols, and the like. Various kinds of digital images may be indicated by different colors in order to increase the visibility. In particular, when the operator's attention should be attracted, display may be performed in which at least one of the positions, sizes, or colors of letters, numerals, graphics, icons, or symbols are changed and highlighted. When such highlighted display is performed, sound or speech may be emitted from an audio device such as a loudspeaker.

### <Communication ring and facing plate>

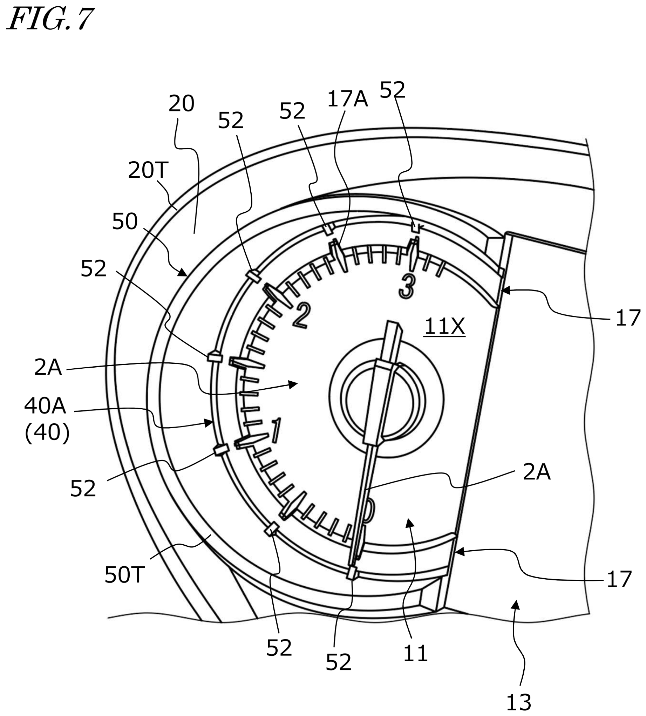

Next, an arc-shaped indicator (C-shaped communication ring) and a facing plate will be described with reference to FIGS. **7** to **9****.**

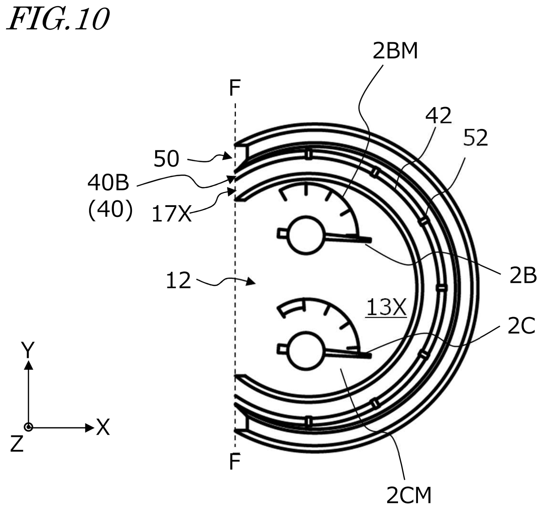

The meter panel unit **100** of this embodiment includes a first arc-shaped indicator (communication ring) **40A** arranged around a sweep range **11X** of the pointer **2A,** and a second arc-shaped indicator **40B** (see FIG. **10**) arranged around sweep ranges of the pointers **2B** and **2C.** In the present disclosure, the term "arc" means a portion of a circle (circumference). The circle is not limited to a "perfect circle", and may include a portion whose curvature is gradually or locally changed like a portion of an ellipse.

The structure of the first arc-shaped indicator **40A** and the structure of the second arc-shaped indicator **40B** are symmetrical about a vertical line, and therefore, are collectively referred to as arc-shaped indicators **40.** The arc-shaped indicators **40** will be described below using the first arc-shaped indicator (communication ring) **40A** as an example, for the sake of simplicity.

As illustrated in FIG. **7****,** the meter panel unit **100** of this embodiment includes a facing plate **50** positioned outward of the arc-shaped indicator **40.** The facing plate **50** is formed of the same material (plastic) as that for the wall surface portion **20.** As illustrated in FIG. **3****,** the facing plate **50** is integral with the wall surface portion **20.** The facing plate **50** is in the shape of roughly an arc as viewed from the front. A height of an upper end **50T** of the facing plate **50** varies continuously from an end **50A** on the upper side to an end **50B** on the lower side, and is greatest at a middle position. The facing plate **50** is a curved wall rising from the meter portion **10.** A height of the visor region **20A** of the wall surface portion **20** from the meter portion **10** is greater than a height of the facing plate **50** from the meter portion **10.** In other words, the greatest height of the visor region **20A** from the meter portion **10** is greater than the greatest height of the facing plate **50** from the meter portion **10.**

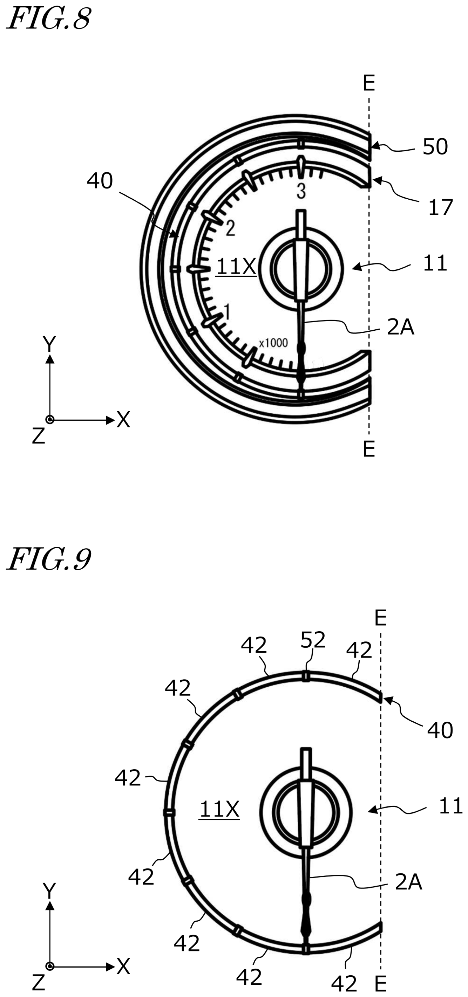

FIG. **8** is a front view illustrating a positional relationship between the first analog meter **11,** the arc-shaped indicator **40,** and the facing plate **50.** FIG. **9** is a front view mainly illustrating an example configuration of the arc-shaped indicator **40.** None of the first analog meter **11,** the arc-shaped indicator **40,** and the facing plate **50** extends rightward (the positive direction of the X axis) beyond a dashed line **E-E** of FIG. **8****.** The display element **13** is arranged rightward (in the positive direction of the X axis) of the dashed line **E-E.**

With such a configuration, while the length of the pointer **2A,** or the radius of the first analog meter **11,** is increased, an increase in the size in the horizontal direction (X-axis direction) of the first analog meter **11** can be reduced. This also holds true for the second analog meter **12.** It should be noted that as illustrated in FIG. **1B****,** when the size in the horizontal direction of the meter portion **10** is increased, the spokes **222A** and **222B** of the steering wheel **220** are more likely to obstruct seeing of the first and second analog meters **11** and **12.** Therefore, it is not preferable to increase the size in the horizontal direction of the meter portion **10.** In this embodiment, the analog meter is contained inside a shape surrounded by the dashed line **E-E** and an arc rather than a circle. Therefore, even for the meter portion **10,** which has a limited size in the horizontal direction, the size in the horizontal direction (X-axis direction) of the display element **13** can be increased while the visibility of the first and second analog meters **11** and **12** is increased. In addition, because the first and second analog meters **11** and **12** and the display element **13** are separated from each other by a straight line, the display area for analog information and the display area for digital information can be clearly separated from each other, and therefore, the visibility of both analog information and digital information can be improved.

In order to obtain the above effect, it is preferable that the central angle of the "arc" of the arc-shaped indicator **40** (**40A**), which is arranged, surrounding the first analog meter **11,** be greater than 180° and smaller than 270°. If the central angle of the "arc" is at most 180°, the visibility of the first analog meter **11** decreases. If the central angle of the "arc" is at least 270°, the effect of reducing the size in the horizontal direction (X-axis direction) of the first analog meter **11** is not sufficient. This also holds true for the arc-shaped indicator **40** (**40B**) surrounding the second analog meter **12.** In terms of design properties, it is preferable that the left and right arc-shaped indicators **40A** and **40B** be positioned symmetrically about a vertical line passing through the center of the display element **13.**

The arc-shaped indicator **40** has at least one light emitting region **42** between the sweep range **11X** of the pointer **2A** and the facing plate **50.** In the example of FIG. **9****,** a plurality of light emitting regions **42** are provided. In this example, each light emitting region **42** has a fine curved shape extending along an arc. The plurality of light emitting regions **42** are arranged in a sequence of arcs to form the arc-shaped indicator **40.** In the case in which the number of light emitting regions **42** is one, a single light emitting region **42** has an arc shape.

In the example illustrated in the figure, the first analog meter **11** includes an arc-shaped scale **17** between the arc-shaped indicator **40** and the sweep range **11X** of the pointer **2A.** The scale **17** has a three-dimensional shape protruding from the display surface (raised scale). The scale **17** is formed of a plastic integrally with the wall surface portion **20** and the facing plate **50.** It should be noted that the scale **17** does not necessarily need to have a three-dimensional shape. The scale **17** desirably has a three-dimensional shape in terms of higher visibility.

Although the plurality of light emitting regions **42** included in the arc-shaped indicator **40** may each include a light emitting element (e.g., an LED or OLED), in this embodiment the plurality of light emitting regions **42** are configured with a plurality of light transmission regions provided on the display surface of the meter portion **10** (i.e., the surface on the front side of the housing of the meter portion **10**) and at least one light emitting device arranged behind the plurality of light transmission regions.

The plurality of light emitting devices may include a plurality of LEDs that emit different colors. In this embodiment, the plurality of light emitting devices include an LED that emits red light, an LED that emits green light, and an LED that emits blue light. By causing these LEDs to selectively emit light, the arc-shaped indicator **40** can exhibit the function of notifying the operator of information using light having various colors. For example, all of the light emitting regions **42** of FIG. **9** can selectively emit red light, green light, and blue light. Alternatively, a light emitting device may be assigned to each of the plurality of light emitting regions **42,** and the plurality of light emitting devices may be caused to emit light separately, so that light beams can be sequentially emitted from the plurality of light emitting regions **42.**

### <Raised scale>

Next, the raised scale **17** will be described. As illustrated in FIGS. **7** and **8****,** the raised scale **17** extends in the shape of an arc inside the arc-shaped indicator **40** to form generally a C-shape. As illustrated in FIGS. **3** and **7****,** the raised scale **17** includes a plurality of notches **17A** arranged at predetermined intervals. The notch **17A** is a portion of the raised scale **17** whose width is locally reduced. The position of the notch **17A** corresponds to the position of a scale that is to be indicated by the tip of the pointer **2A** in the first analog meter **11.** The presence of the three-dimensional notches **17A** facilitates reading of scales by the operator.

As illustrated in FIG. **7****,** the facing plate **50** includes a plurality of protrusions **52** that protrude toward the sweep range **11X** of the pointer **2A.** The plurality of protrusions **52** are provided at the positions of the notches of the raised scale **17,** or in other words, positions aligned with the scales. Therefore, the notch **17A** of the raised scale **17** is recognized as a graphic integrated with the protrusion **52,** resulting in an improvement in the visibility of the scale. The plurality of protrusions **52** each extend across between the plurality of light emitting regions **42** of the arc-shaped indicator **40.** Therefore, the array of the plurality of light emitting regions **42** also corresponds to the array of the scales.

As can be seen from FIG. **3****,** the plurality of protrusions **52** serve as a bridge that connects the raised scale **17** to the facing plate **50.** The facing plate **50** is connected to the wall surface portion **20.** In this embodiment, the wall surface portion **20,** the facing plate **50,** and the raised scale **17** are integrally formed of a resin. The plurality of protrusions **52,** which extend from the facing plate **50,** delimit a boundary portion of the plurality of light emitting regions **42** in the arc-shaped indicator **40.**

Next, the second analog meter **12** and the second arc-shaped indicator **40B** will be described with reference to FIG. **10****.** The second arc-shaped indicator **40B** and the first arc-shaped indicator **40A** are symmetrical about a vertical line, and have substantially the same configuration. A facing plate (right facing plate) **50** is provided outward of the second arc-shaped indicator **40B.** The left facing plate **50** and the above facing plate (left facing plate) **50** are symmetrical about a vertical line.

Although an arc-shaped rib **17X** corresponding to the raised scale **17** is provided inside the second arc-shaped indicator **40B,** no notches are present in the arc-shaped rib **17X.** Protrusions (bridges) **52** are equally spaced and arranged between the arc-shaped rib **17X** and the right facing plate **50** so as to delimit a plurality of light emitting regions **42** included in the second arc-shaped indicator **40B.**

A sweep range **13X** of the second pointer **2B** and the third pointer **2C** is provided in a range surrounded by the second arc-shaped indicator **40B.** A rotational angle range **2BM** of the second pointer **2B** and a rotational angle range **2CM** of the third pointer **2C** have a similar or congruent outer shape.

With such a configuration, scales can be intuitively read based on the movements of the second pointer **2B** and the third pointer **2C,** and are less likely to be erroneously read.

### <Information display system>

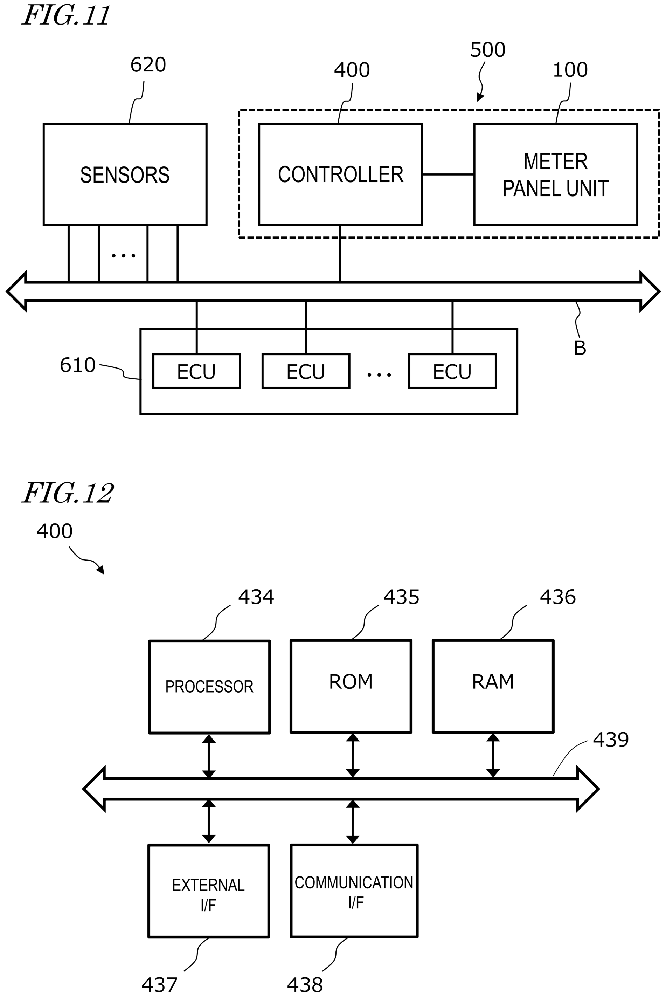

An information display system **500** according to an embodiment of the present disclosure will be described below with reference to FIGS. **11** to **14****.** FIG. **11** is a block diagram schematically illustrating an example configuration of the information display system **500** in an embodiment of the present disclosure. The information display system **500** includes the above meter panel unit **100,** and a controller **400** that controls the meter panel unit **100.** The controller **400** may include an electronic control unit (ECU) arranged in the work vehicle. The information display system **500** may further include an acoustic device such as a buzzer or speaker.

The information display system **500** is communicably connected via a bus **B** to ECUs **610** and sensors **620** included in the work vehicle. The ECUs **610** may be collectively referred to as a "vehicle controller". In the present description, various ECUs included in the work vehicle are referred to as "vehicle ECUs", and an ECU in the controller **400** included in the information display system **500** is referred to as a "meter ECU" to distinguish between the two. Various vehicle ECUs and the meter ECU can communicate with each other according to a vehicle bus standard such as a controller area network (CAN), for example. For example, one vehicle ECU among the ECUs **610** included in the work vehicle receives signals from other vehicle ECUs and sensor data output from each sensor included in the sensors **620,** and instructs the meter ECU to display warning messages as described below or to or turn on/off/blink indicators according to the state of the work vehicle. The meter ECU receives instructions from the vehicle ECU and causes warning messages to be displayed in the display region, or causes indicators to be turned on or off, or to blink.

In FIG. **11****,** wiring other than the wiring of the bus **B** is simplified. However, for example, there may be wiring for directly transmitting signals from one or more sensors included in the sensors **620** included in the work vehicle to the controller **400,** or wiring to connect an input device described below to the controller **400.** In addition, there is power supply wiring for supplying power from a battery to each of the meter panel unit **100,** the controller **400,** the ECUs **610,** and the sensors **620** of the work vehicle.

FIG. **12** is a block diagram illustrating an example hardware configuration of the controller **400.** The controller **400** includes a processing device **434,** a ROM (Read Only Memory) **435,** a RAM (Random Access Memory) **436,** an external I/F **437,** and a communication I/F **438.** These components are connected to each other via a bus **439.**

The processing device **434** is a device including one or more semiconductor integrated circuits (e.g., processors). The processor is also referred to as a central processing unit (CPU) or a microprocessor. The processor sequentially executes computer programs stored in the ROM **435** to implement various processes necessary for image display. The processor is broadly interpreted as a term including an FPGA (Field Programmable Gate Array) equipped with a CPU, a GPU (Graphic Processor Unit), an ASIC (Application Specific Integrated Circuit), or an ASSP (Application Specific Standard Product).

The ROM **435** is, for example, a writable memory (e.g., PROM), a rewritable memory (e.g., flash memory), or a read-only memory. The ROM **435** stores programs that control the operation of the processor. The ROM **435** does not need to be a single recording medium and may be a collection of multiple recording media. Some of the multiple collections may be removable memory.

The RAM **436** provides a working area for temporarily expanding programs stored in the ROM **435** at boot time. The RAM **36** does not need to be a single recording medium and may be a collection of multiple recording media.

The external I/F **437** is an interface to connect the meter panel unit **100** to external devices. Examples of the external I/F **437** include a USB (Universal Serial Bus) interface, and digital or analog video interfaces.

The communication I/F **438** is an interface for communication between the controller **400** and other electronic components or ECUs. For example, the communication I/F **438** can perform wired communication in accordance with various protocols. The communication I/F **438** may perform wireless communication in accordance with Bluetooth^{®} standards and/or Wi-Fi^{®} standards. Both standards include wireless communication standards using frequencies in the 2.4 GHz band.

The controller **400** may further include a storage device. The storage device may be, for example, a semiconductor memory, a magnetic storage device, or an optical storage device, or a combination thereof.

The ECUs **610** in the work vehicle include, for example, an ECU for speed control, an ECU for steering control, and an ECU for implement control. In the case where the work vehicle (e.g., tractor) is configured to travel by automatic driving, the ECUs **610** may further include an ECU for automatic driving control. The ECU for automatic driving control performs calculations and control for realizing automatic driving based on data output from various sensors mounted on the vehicle body.

The sensors **620** may include, for example, a temperature sensor, an illuminance sensor, a fuel sensor, a water temperature sensor, an oil level gauge, an engine rotation sensor, a vehicle speed sensor, a battery voltage sensor, a shuttle sensor, a hand accelerator sensor, an accelerator pedal sensor, a main transmission lever sensor, an auxiliary transmission lever sensor, a seat belt sensor, a PM sensor, an acceleration sensor, an angular velocity sensor, an inertial measurement unit (IMU), a geomagnetic sensor, an imaging device, a LiDAR sensor, an ultrasonic sensor, an obstacle contact sensor, and a global navigation satellite system (GNSS) receiver.

The controller **400** of the information display system **500** may be an integrated circuit device mounted on a substrate inside the meter panel unit **100,** or may be an external integrated circuit device externally attached to the meter panel unit **100.** Furthermore, some or all of the functions of the controller **400** may be realized by one or more vehicle ECUs. Alternatively, some or all of the functions of the controller **400** may be realized by one or more servers (computers) connected via the communication I/F **438** through a communication network. Thus, one or more vehicle ECUs and/or one or more servers may cooperate with the controller **400** to realize various functions required for the information display system **500.** In this case, the vehicle ECUs and/or servers function as part of the information display system **500.**

In the information display system **500** of this embodiment, the controller **400** is configured to cause the arc-shaped indicator **40** to display information before causing the display element **13** to display various kinds of information at vehicle startup. This allows information that the operator should know in the first place to be presented to the operator with higher priority at vehicle startup. Such information has information indicating a state (a state classified as abnormality in traveling or working) of the work vehicle. The controller **400** is also configured to change the color of emitted light according to contents of information. For example, the controller **400** may be configured to emit blue light from the arc-shaped indicator **40** when abnormality does not arise during starting, and to emit red light indicating abnormality immediately after starting if a problem is expected to arise during traveling. Examples of a cause for a problem that will arise during traveling include an abnormal voltage of a battery, an abnormal pressure of an engine oil, abnormal heating of an engine, and an abnormality in a brake system. It should be noted that the color of the emitted light is not limited to blue or red, and may be green.

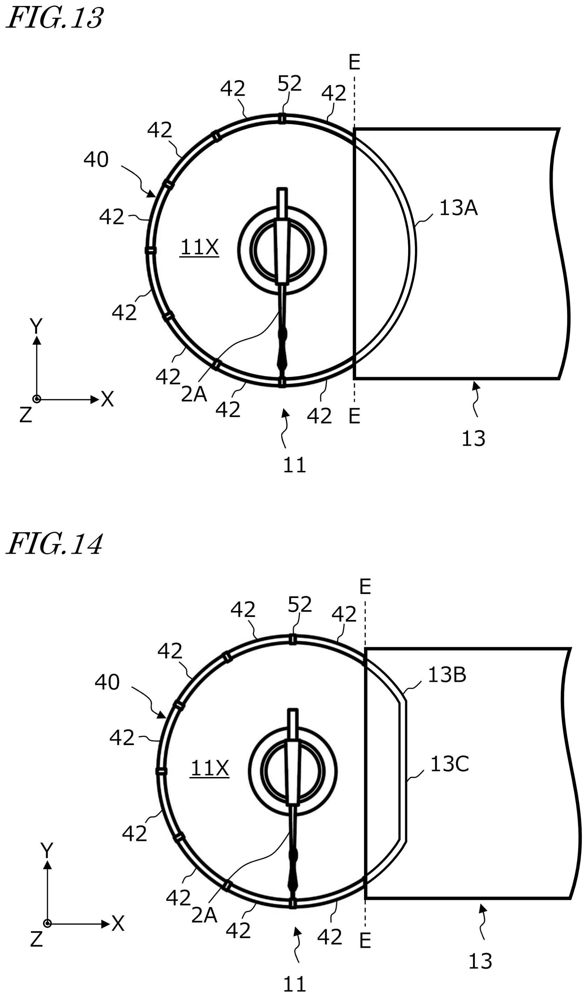

Furthermore, in this embodiment, the controller **400** is configured to cause the display element **13** to display a curved line-shaped image positioned on an extension line of the arc. FIG. **13** is a front view schematically illustrating an example in which an arc **13A** having the same color as that of light emitted from the light emitting region **42** of the arc-shaped indicator **40** is displayed. In FIG. **13****,** as an example, an arc **13A** having the same center as that of the arc of the arc-shaped indicator **40** is displayed. FIG. **14** is a front view schematically illustrating an example in which an arc **13B** having the same color as that of light emitted from the light emitting region **42** of the arc-shaped indicator **40,** and another object **13C** having another shape and having an arc having the same color, are displayed. In the example of FIG. **14****,** the object **13C** is a straight line portion. The controller **400** causes the display element **13** to display the concentric arc **13B** with the arc of the light emitting region **42,** and the straight line portion connected to the arc **13B.** The straight line portion extends in parallel with a straight line forming the boundary between the first analog meter **11** and the display element **14** (corresponding to a dashed line **E-E** of FIG. **14**). By providing such display, a portion of the circle surrounding the first analog meter **11** that is cut away by the dashed line **E-E** is seen as a portion of the first analog meter **11** by the operator, and therefore, the operator can feel that the first analog meter **11** is large. In addition, an image that is displayed as if the image were a portion of the first analog meter **11** (hereinafter referred to as a "ring complementing image") may be partially hidden by information such as numerals or letters displayed on the display element **13.** Like the object **13C,** the arc **13B** portion may include a linear shape. The inclusion of a linear shape in the portion displayed on the display element **13** allows for a sharp design.

The controller **400** can cause the display element **13** to display various images, which are not limited to the examples of FIGS. **13** and **14****,** in association with light emitted from the light emitting region **42** of the arc-shaped indicator **40.** The controller **400** can also cause the display element **13** to display various images in synchronization with the flickering of the light emitting region **42** of the arc-shaped indicator **40.** What is intended by the display of the arc-shaped indicator **40** to notify the operation can be more easily understood by the operator by emphasizing that display and the display of the display element **13** or associating these displays with each other.

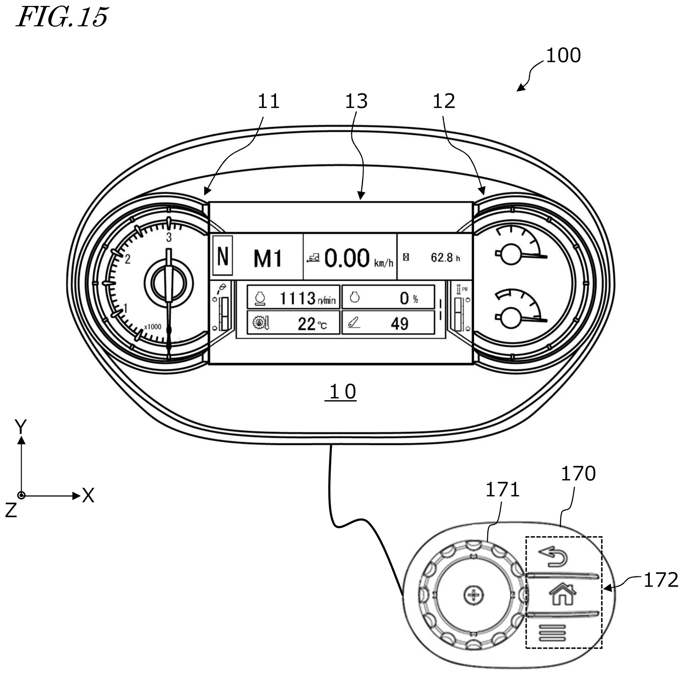

After startup of the meter panel unit **100,** a home screen is displayed in the display region of the display element **13.** FIG. **15** is a diagram illustrating an example of a home screen. Starting from the home screen, the user can perform operations to change the display of content on the display region or select various setting items using an input device described below.

In the example illustrated in FIG. **15****,** an input device **170** to enable interactive operations by the user is connected to the meter panel unit **100** via a communication cable. The input device **170** includes, for example, a selector switch **171** such as a jog dial and an operation switch **172.** The input device **170** may be connected to the meter panel unit **100** wirelessly or by wire. Any device that accepts user operations can be used as the input device **170.** The input device **170** may be, for example, a rotary switch, a slide switch, a push button switch, a touch screen, a joystick, or a combination of two or more thereof.

The display element **13** includes a display region in which various images showing information about the work vehicle are displayed. Information about the work vehicle includes, for example, information related to an internal combustion engine (engine), the vehicle body, a PTO shaft, hydraulics/three-point hitch, and electrical equipment provided in the vehicle body. This information is information indicating the internal state of the vehicle system. Information related to the vehicle body includes, for example, information on the traveling direction of the vehicle, clutch, transmission, brakes, headland control, and cruise control. Furthermore, various contents including, for example, camera images, radio setting screens, and audio setting screens may be displayed in the display region of the display element **13.**

### <Segmentation of display region>

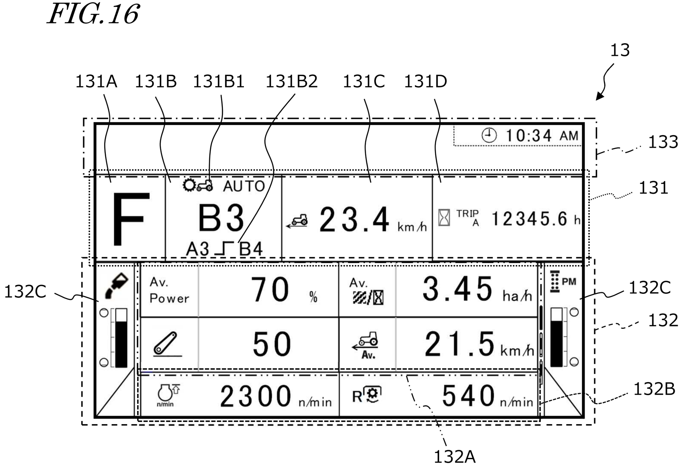

Next, segmentation of the display region will be described with reference to FIG. **16****.**

FIG. **16** is a diagram schematically illustrating an example of segmentation of the display region. The display region of the display element **13** is divided into multiple blocks. In other words, the display region of the display element **13** has multiple regions. The multiple regions in the example illustrated in FIG. **16** include a primary region **131,** a sub-region **132,** and an LCD indicator region **133.** The primary region **131** in FIG. **16** is a region surrounded by a dotted line in the display region of the display element **13.** The sub-region **132** is a region surrounded by a dashed line in the display region of the display element **13.** The LCD indicator region **133** is a region surrounded by a dash-dot line in the display region of the display element **13.** These three regions do not overlap with each other. It should be noted that the dashed lines, dotted lines, and dash-dot lines in FIG. **16** are partially overlapping for clarity.

The primary region **131** is a region for displaying images in the foreground (or front). The primary region **131** in the example illustrated in FIG. **16** is a rectangular region (or panel-shaped region). However, the external shape of the primary region **131** may be, for example, an ellipse or a Figure that is a combination of straight lines and curved lines. A primary image showing more important information (hereinafter referred to as "primary information") among information about the work vehicle is displayed in the primary region **131.** The primary information is information that the user should know with priority, and includes, for example, information indicating the direction of travel of the work vehicle, transmission state, and vehicle speed (hereinafter referred to as "vehicle speed").

The primary information indicated by the primary image displayed in the primary region **131** in this way is displayed in the foreground of the display region. As illustrated in FIG. **15****,** the primary image is displayed in front of the ring complementing image. In this way, the primary image can appropriately convey primary information to the user without being hidden by other images or content. Therefore, the visibility of primary information having particularly high importance among various information is improved, and overlooking of primary information is reduced.

In the example illustrated in FIG. **16****,** the primary region **131** has a belt-like shape extending in the horizontal direction. Multiple types of information about the travel state of the work vehicle are displayed in the primary region **131.** The primary region **131** is divided into multiple regions. In the example of FIG. **16****,** the primary region **131** is divided into a first region **131A,** a second region **131B,** a third region **131C,** and a fourth region **131D** arranged horizontally.

The first region **131A** positioned at the left end displays the state of the shuttle lever of the work vehicle, that is, the direction of travel. The first region **131A** displays, for example, information indicating whether the shuttle lever is in a forward (F), neutral (N), or reverse (R) state.

The second region **131B** positioned second from the left displays information about the transmission state, for example, setting of the gear stage of the work vehicle. In the example of FIG. **16****,** the current settings of the main transmission and auxiliary transmission are displayed as "B3" symbols in the second region **131B.** "B" indicates the setting stage of the auxiliary transmission, and "3" indicates the setting stage of the main transmission. The second region **131B** may display an icon **131B1** indicating that it is in automatic transmission mode and a range **131B2** of gear stages in the automatic transmission mode, as illustrated in FIG. **16****.**

The third region **131C** displays vehicle speed information. The controller **400** switches and displays vehicle speed information in kilometer units or mile units according to, for example, commands from the vehicle ECU.

The fourth region **131D** at the right end displays information other than the direction of travel, transmission state, and vehicle speed. In the example of FIG. **16****,** the fourth region **131D** displays the measured value of the hour meter, that is, the operating time of the work vehicle up to now. The fourth region **131D** may display other information, not limited to the measured value of the hour meter. For example, various information such as the upper limit setting value of engine speed or the target value of engine speed recorded in memory may be displayed in the fourth region **131D.** The controller **400** may be configured to dynamically change the display of the fourth region **131D** according to, for example, commands from the vehicle ECU. The fourth region **131D,** together with a region **132B** described below, dynamically displays the performance of travel and work of the work vehicle. Therefore, the fourth region **131D** is sometimes referred to as a "dynamic performance monitor region".

The sub-region **132** is positioned below the primary region **131.** Various content is displayed in the sub-region **132.** The sub-region **132** in the example illustrated in FIG. **16** is a rectangular region and is further divided into three types of regions. The sub-region **132** includes a performance monitor region **132A,** a dynamic performance monitor region **132B,** and two gauge regions **132C.**

The performance monitor region **132A** is the largest region among the three regions included in the sub-region **132** and is positioned toward the upper side of the sub-region **132.** The performance monitor region **132A** is sometimes referred to as the "upper region" in the sub-region **132.** The performance monitor region **132A** mainly displays one or more items selected by the user (hereinafter referred to as "selected items") from among various items showing various functional performance information. Examples of items that can be selected by the user include information on engine speed, engine speed upper limit setting value, engine speed memory value, fuel consumption, fuel efficiency, travel distance, load factor, PTO shaft rotation speed, slip rate, diesel particulate filter (DPF) regeneration, and work area.

The screen of selected items may include multiple pages that can be advanced or returned by the user operating the input device. FIG. **16** shows an example of multiple selected items displayed on one page among multiple pages. In the example illustrated in FIG. **16****,** four selected items are displayed on one page. However, the number of selected items displayed on one page is not limited to four and may be, for example, two, three, or five or more.

The dynamic performance monitor region **132B** is positioned toward the lower side of the sub-region **132.** Various items showing the various functional performance information described above may be displayed in the dynamic performance monitor region **132B.** The dynamic performance monitor region **132B** is sometimes referred to as the "lower region" in the sub-region **132.** The display of information displayed in the dynamic performance monitor region **132B** may be controlled by the controller **400** (e.g., meter ECU) that receives commands from, for example, the vehicle ECU. The controller **400** may be configured to change the display of the dynamic performance monitor region **132B** in response to commands from the vehicle ECU. As illustrated in FIG. **16****,** for example, two items may be displayed in the dynamic performance monitor region **132B.** However, the number of items is not limited to two. Nothing may be displayed in the dynamic performance monitor region **132B** as illustrated in FIG. **15****.**

The gauge regions **132C** are positioned on the right and left sides of the sub-region **132.** The performance monitor region **132A** and the dynamic performance monitor region **132B** are positioned between the two gauge regions **132C** on the right and left. Gauge images including icons and scales may be displayed in each of the gauge regions **132C** on the right and left sides. Examples of gauge images include information on the remaining amount of diesel exhaust fluid (DEF), particulate matter (PM) accumulation, and tire air pressure.

The images displayed in the performance monitor region **132A** and the dynamic performance monitor region **132B** may be changed according to user operations using the input device. For example, camera images, images for radio or audio settings, front loader control, cylinder flow control, operation member settings, steering assist control, automatic steering control, and attachment work machine control, or launch images displaying a list of functional items may be displayed in a region corresponding to the entire performance monitor region **132A** and dynamic performance monitor region **132B.** By integrating two or more regions and using them as one region in this way, images and content can be displayed relatively large.

The LCD indicator region **133** is positioned above the primary region **131.** The LCD indicator region **133** in the example illustrated in FIG. **16** is a rectangular region like the primary region **131** and the sub-region **132.** The LCD indicator region **133** functions as a region for displaying information indicating the state of the work vehicle, warning information, maintenance-related information, and the like. For example, indicators that turn on when a warning state such as brake warning or fuel remaining warning should be issued and turn off when the state is resolved may be displayed in the LCD indicator region **133.** As another example, indicators that turn on periodically to prompt the user for maintenance such as DPF regeneration or engine oil change may be displayed in the LCD indicator region **133.** As a further example, indicators for requesting an increase or decrease in engine speed may be displayed in the LCD indicator region **133.** In the LCD indicator region **133,** no indicators are normally displayed, and a black background is displayed. When a state requiring display of warning or maintenance information arises, the indicator corresponding to that warning or maintenance information turns on. A maximum of, for example, about 10 indicators may be displayed in the LCD indicator region **133.** Since indicators can be displayed prominently against a black background, it is possible to make it easier for the operator or user to notice the occurrence of LCD indicators.

The LCD indicator region **133** is positioned below the indicator region **14T** illustrated in FIG. **5****.** The indicators arranged in the indicator region **14T** are hardware indicators that are turned on by light emitting devices such as LEDs. In contrast, the indicators displayed in the LCD indicator region **133** are turned on by drawing processing on the LCD. In this specification, hardware indicators using LEDs are referred to as "LED indicators", and indicators displayed in the LCD indicator region **133** are referred to as "LCD indicators", and the two may be distinguished.

In the sub-region **132** illustrated in FIG. **16****,** an image (hereinafter sometimes referred to as a "popup image") including a message for notifying the user of the content of an abnormality or failure when, for example, an abnormality or failure of the engine or electrical equipment is detected, or a message for warning about the internal state of the vehicle system, may also be displayed. In addition, popup images including messages indicating maintenance information may also be displayed in the sub-region **132.**

### <Setting function for each auxiliary transmission stage>

The transmission of the work vehicle includes a main transmission and an auxiliary transmission. Multiple stages of gear shifting are possible for each of the main transmission and the auxiliary transmission. For example, the auxiliary transmission may be configured to enable gear shifting in 2 stages (low, high), 3 stages (e.g., low, medium, high), or 4 stages (e.g., creep, low, medium, high). The main transmission may be configured to enable gear shifting in, for example, 4 stages, 6 stages, 8 stages. Additionally, the work vehicle in this embodiment can travel in automatic transmission mode. In automatic transmission mode, the work vehicle automatically shifts gears within a preset range of main transmission stages. For example, the main transmission stages are automatically switched in response to fluctuations in engine speed due to load changes, work implement movements, or variations in accelerator pedal depression (or tilt of the accelerator lever).

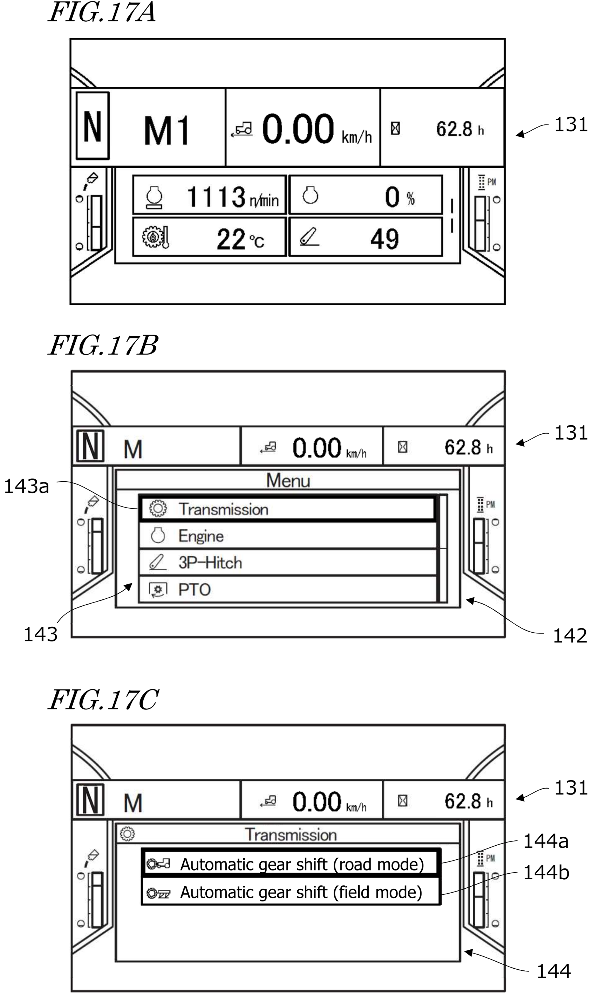

In this embodiment, various operation settings for the work vehicle are available for each stage of the auxiliary transmission of the work vehicle. For example, it is possible to set the switching range of main transmission stages in automatic transmission mode for each stage of the auxiliary transmission. It may also be possible to set the upper limit of engine speed for each stage of the auxiliary transmission. The controller **400** of the information display system causes a display region of the display element **13** to display a graphical user interface (GUI) to enable operation settings to be made for the work vehicle for each stage of the auxiliary transmission on a single setting screen. Such a GUI enables the user to efficiently perform various settings for each stage of the auxiliary transmission. Examples of a GUI for performing various settings for each stage of the auxiliary transmission will be described below with reference to FIGS. **17A** to **17E****.**

FIG. **17A** shows an example of a home screen displayed on the display element **13.** FIG. **17B** shows an example of a menu screen displayed on the display element **13.** When the user presses a menu button included in the operation switch **172** of the input device **170** (see FIG. **15**) from the home screen illustrated in FIG. **17A****,** the menu screen **142** illustrated in FIG. **17B** is displayed.

The menu screen **142** is an example of a GUI for setting each of multiple setting items related to the operation of the work vehicle. The menu screen **142** is displayed below the primary region **131.** In the example of FIG. **17B****,** when the menu screen **142** is displayed, the vertical width of the primary region **131** is reduced. This allows the menu screen **142** to be displayed widely in the expanded region.

In the menu screen **142,** a list **143** of multiple categories classified by device or function provided in the work vehicle is displayed. For example, the list **143** of categories such as transmission, engine, three-point hitch, and PTO may be displayed. The user can select one category from among multiple categories included in the list **143** by operating the selector switch **171** of the input device **170.** For example, when the user operates the selector switch **171** to place the cursor on one category and presses an enter button, the screen transitions to a screen displaying a list of multiple setting items included in that category. In the example of FIG. **17B****,** the "Transmission" category **143a** is selected from among the multiple categories. When the enter button is pressed in this state, for example, the screen illustrated in FIG. **17C** is displayed.

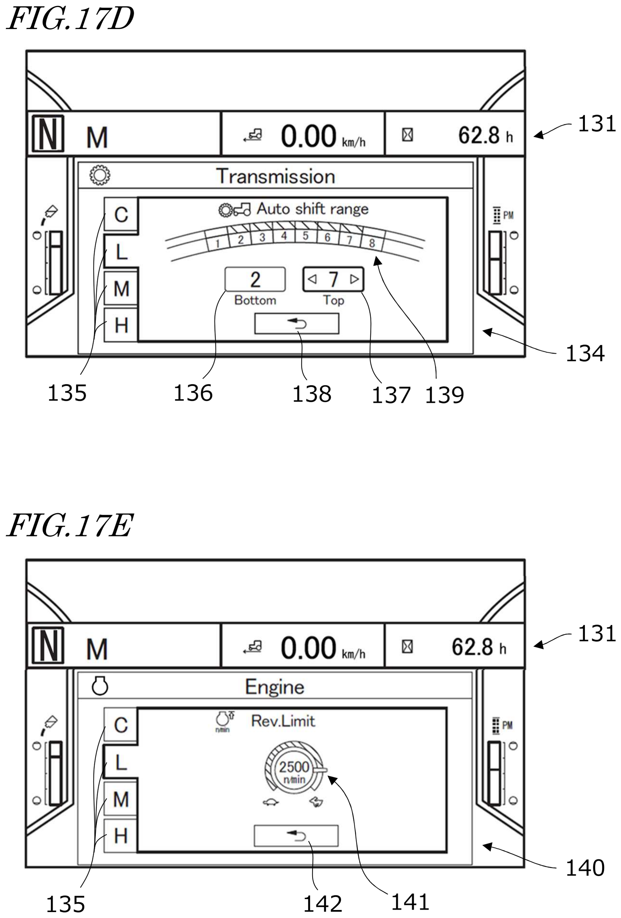

FIG. **17C** shows an example of a setting screen **144** for selecting setting items related to transmission. In the example of FIG. **17C****,** two setting items **144a** and **144b** for setting the range of main transmission stages in automatic gear shift for road mode and field mode, respectively, are displayed. The user can select one of these setting items **144a** and **144b** by operating the selector switch **171.** For example, when the user selects the "Automatic gear shift (road mode)" item **144a** and presses the enter button, the screen illustrated in FIG. **17D** is displayed.

FIG. **17D** shows an example of a setting screen **134** for setting the range of main transmission stages in automatic transmission mode for each stage of the auxiliary transmission. On the single setting screen **134** as shown in FIG. **17D****,** the range of main transmission stages in automatic transmission mode may be set for each stage of the auxiliary transmission. The controller **400** causes the same number of tabs **135** as the number of stages of the auxiliary transmission (four in this example) to be displayed within the setting screen **134.** In the example of FIG. **17D****,** the stages of the auxiliary transmission include four stages including creep (C), low (L), medium (M), and high (H). The controller **400** causes four tabs **135** corresponding to C, L, M, and H to be displayed. The user can set the range of main transmission stages in automatic transmission mode for each stage of the auxiliary transmission by operating the selector switch **171** of the input device **170** to switch tabs **135.** FIG. **17D** shows an example of a setting screen **134** for setting the range of main transmission stages when "L" is selected as the auxiliary transmission stage. This setting screen **134** includes a region **136** for setting the lower limit value (Bottom) of main transmission stages, a region **137** for setting the upper limit value (Top) of main transmission stages, a region **138** for displaying a decision button, and a region **139** for visually displaying the set range of main transmission stages. The user can set the range of main transmission stages for each stage of the auxiliary transmission by selecting a tab **135** corresponding to the desired auxiliary transmission stage to be set, operating the selector switch **171** of the input device **170** to change the numerical values in regions **136** and **137,** and pressing the decision button. FIG. **17D** shows an example where the range of main transmission stages is set to "2-7". In this example, the set range of main transmission stages is visually represented by displaying the corresponding range in the arc-shaped image displayed in region **139** in a prominent color. This allows the setting range to be clearly shown to the user. It should be noted that such a display mode is merely an example, and other display modes may be adopted.

In the example of FIG. **17D****,** "L" is selected, but a similar setting screen **134** is displayed when tabs **135** other than "L" are selected. When tabs **135** are switched, the display of the setting screen **134** also switches, but the layout of the setting screen **134** is common to all. The user can set the range of main transmission stages corresponding to each auxiliary transmission stage with the same operation by switching the tabs **135.**

In this way, settings can be made for each stage of the auxiliary transmission through simple operations such as switching tabs. In the present disclosure, even when multiple displays are switched by operations such as tab selection, as long as similar setting screens are used, it is interpreted that operation setting for the work vehicle is possible for each stage of the auxiliary transmission on "a single setting screen."

In the above example, the number of auxiliary transmission stages is four, but it may be two, three, or five or more stages. For example, when the stages of the auxiliary transmission include three stages including low (L), medium (M), and high (H), the controller **400** may be configured to cause three tabs corresponding to L, M, and H to be displayed on the setting screen.

In the example of FIG. **17D****,** the operation setting item for the work vehicle set for each stage of the auxiliary transmission is the setting of the range of main transmission stages corresponding to each stage of the auxiliary transmission in the automatic transmission function. This is not limited to this example, and the item to be set may be other items, for example, the upper limit value of engine speed corresponding to each stage of the auxiliary transmission.

FIG. **17E** shows an example of a setting screen **140** for setting the upper limit of engine speed for each stage of the auxiliary transmission. On a single setting screen **140** as shown in FIG. **17E****,** the upper limit value for engine revolutions per unit time (for example, one minute) can be set for each stage of the auxiliary transmission. The controller **400** causes the same number of tabs **135** as the number of stages of the auxiliary transmission (four in this example) to be displayed within the setting screen **140.** The user can set the range of main transmission stages in automatic transmission mode for each stage of the auxiliary transmission by operating the selector switch **171** of the input device **170** to switch tabs **135.** FIG. **17E** shows an example of a setting screen **140** for setting the upper limit value of engine speed when "L" is selected as the auxiliary transmission stage. This setting screen **140** includes a region **141** in which an image resembling a dial (knob) for setting the upper limit value of engine speed is displayed, and a region **142** in which a decision button is displayed. The user can set the upper limit value of engine speed for each stage of the auxiliary transmission by selecting a tab **135** corresponding to the desired auxiliary transmission stage to be set and operating the selector switch **171** (e.g., jog dial) of the input device **170** to change the numerical value in region **141.**

In this embodiment, the menu screens shown in FIGS. **17B** and **17C****,** and the setting screens shown in FIGS. **17D** and **17E** are displayed below the primary region **131.** The primary region **131** always displays important information such as the vehicle speed and transmission state of the work vehicle during operation of the work vehicle. When displaying the menu screens and setting screens, the controller **400** displays the primary region **131** narrower than the default state shown in FIG. **17A****.** This allows the menu screens and setting screens to be displayed in a wide area, improving visibility.

As described above, according to this embodiment, various settings can be easily made for each stage of the auxiliary transmission on a single setting screen. For example, by displaying the same number of tabs as the number of auxiliary transmission stages side by side, related setting items can be easily set by switching tabs. Since there is no need to switch between multiple setting pages, the effort required for setting operations for each auxiliary transmission is reduced, and operability can be improved.

Information set by the user is sent from the controller **400** (e.g., meter ECU) to the vehicle controller (e.g., vehicle ECU). The vehicle controller controls the work vehicle according to the set content. This ensures that the information set for each stage of the auxiliary transmission (e.g., the range of main transmission stages in automatic transmission mode or the upper limit value of engine speed) is reflected.

It should be noted that items that can be set for each stage of the auxiliary transmission are not limited to the range of main transmission stages in automatic transmission mode and the upper limit value for engine revolutions per unit time. Similar GUIs can be applied to other items that can be set for each stage of the auxiliary transmission to improve operability.

The information display systems in the above embodiments can also be retrofitted to work vehicles that do not have these functions. Such systems may be manufactured and sold independently of work vehicles. Computer programs used in such systems may also be manufactured and sold independently of work vehicles. Computer programs may be provided, for example, stored on non-transitory computer-readable storage media. Computer programs may also be provided by download via telecommunication lines (e.g., the Internet).

### INDUSTRIAL APPLICABILITY

The technologies of the present disclosure are widely applicable to various types of work vehicles used in smart agriculture.

### REFERENCE SIGNS LIST

**10**...meter portion, **11**...first analog meter, **12**...second analog meter, **13**...display element, **14T**...indicator region, **14L**...indicator region, **14R**...indicator region, **17**...raised scale, **20**...wall surface portion, **30**...transparent cover, **30A**...front surface section of transparent cover, **30B**...side surface section of transparent cover, **40**...arc-shaped indicator, **50**...facing plate, **100**...meter panel unit, **400**...controller, **500**...information display system

## Claims

1. An information display system for a work vehicle including an auxiliary transmission, the information display system comprising:
a meter panel unit including a display element; and
a controller configured to control the meter panel unit,
wherein
the controller is configured to cause the display region of the display element to display a graphical user interface (GUI) to enable operation settings to be made for the work vehicle for each stage of the auxiliary transmission on a single setting screen.

2. The information display system of claim 1, wherein
the controller is configured to cause a number of tabs equal to the number of stages of the auxiliary transmission to be displayed within the setting screen, and
the operation setting for each stage of the auxiliary transmission is possible by the user switching the tabs.

3. The information display system of claim 2, wherein
the stages of the auxiliary transmission include three stages including low (L), medium (M), and high (H), and
the controller is configured to cause three tabs corresponding to L, M, and H to be displayed on the setting screen.

4. The information display system of claim 2, wherein
the stages of the auxiliary transmission include four stages including creep (C), low (L), medium (M), and high (H), and
the controller is configured to cause four tabs corresponding to C, L, M, and H to be displayed on the setting screen.

5. The information display system of any one of claims 1 to 4, wherein the operation setting includes setting a range of main transmission stages corresponding to each stage of the auxiliary transmission in an automatic transmission function.

6. The information display system of any one of claims 1 to 4, wherein the operation setting includes setting an upper limit value for engine revolutions per unit time corresponding to each stage of the auxiliary transmission.

7. The information display system of any one of claims 1 to 4, wherein the controller is configured to transmit information set for each stage of the auxiliary transmission to a vehicle controller that controls the work vehicle.

8. The information display system of any one of claims 1 to 4, wherein
the display region of the display element includes a primary region in which information related to a travel state of the work vehicle is displayed, and
the controller is configured to display the setting screen below the primary region.

9. The information display system of any one of claims 1 to 4, wherein
the meter panel unit includes first and second analog meters each including a pointer, and
the display element is provided between the first and second analog meters.

10. A work vehicle comprising the information display system of any one of claims 1 to 4.

11. A computer-implemented display method for displaying an image on a display element of a meter panel unit for a work vehicle including an auxiliary transmission, the method comprising:
causing a display region of the display element to display a graphical user interface (GUI) to enable operation settings to be made for the work vehicle for each stage of the auxiliary transmission on a single setting screen.

12. A computer program executed by a computer to cause a display element of a meter panel unit for a work vehicle including an auxiliary transmission to display an image, the computer program causing the computer to perform:
causing a display region of the display element to display a graphical user interface (GUI) to enable operation settings to be made for the work vehicle for each stage of the auxiliary transmission on a single setting screen.
